(19) Europäisches Patentamt
European Patent Office
Office européen des brevets

(11) Publication number: **0 141 461**
**B1**

(12) **EUROPEAN PATENT SPECIFICATION**

(45) Date of publication of patent specification: **27.04.88**

(51) Int. Cl.$^4$: **C 08 F 10/06,** C 08 F 4/64

(21) Application number: **84201512.5**

(22) Date of filing: **17.10.84**

(54) **Process for continuous polymerization of propene.**

(30) Priority: **25.10.83 US 545281**

(43) Date of publication of application:
**15.05.85 Bulletin 85/20**

(45) Publication of the grant of the patent:
**27.04.88 Bulletin 88/17**

(84) Designated Contracting States:
**AT BE DE FR GB IT NL SE**

(56) References cited:
**GB-A-1 060 157**
**GB-A-1 550 195**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Becker, Phillip Carey**
**1 Papworth Avenue**
**Metarie Louisiana 70005 (US)**
Inventor: **Harris, Ronald David**
**109 Ormond Village**
**Destrehan Louisiana 70047 (US)**
Inventor: **McCoy, Ned Roger, Jr.**
**2083 Elizabeth Avenue**
**Winston-Sales North Carolina 27103 (US)**

(74) Representative: **Aalbers, Onno et al**
**P.O. Box 302**
**NL-2501 CH The Hague (NL)**

**EP 0 141 461 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for continuous polymerization of propene using a catalyst system comprising:

(a) a highly active solid catalyst component comprising titanium tetrachloride, magnesium chloride, alkoxy groups and an electron donor,

(b) a compound $AlR_3$ where R represents an alkyl group of from 2 to 8 carbon atoms, and

(c) a selectivity control agent.

For convenience of reference, the solid titanium-containing constituent of such catalyst systems is referred to herein as "procatalyst" and compound $AlR_3$, is referred to herein as "cocatalyst". The selectivity control agent (SCA) is a Lewis base which is able to form a complex with the cocatalyst, e.g. an aromatic ester.

It is a first object of the present invention to improve the polymerization activity of the relevant catalyst systems and in accordance with an important aspect of this invention this is achieved by contacting the procatalyst with certain dialkyl aluminium chlorides under conditions defined hereinafter. This contacting is referred to herein as "pretreatment".

The pretreatment modifies the procatalyst to make it about 40 to 80% more active than untreated procatalyst. However, the pretreated procatalyst has such an enhanced polymerization activity, that it presents certain problems in handling and in supplying it to the polymerization reactor vessel. The standard method for injecting non-pretreated solid procatalyst components into the polymerization reactor vessel involved using a stream of a suspension of procatalyst in an inert hydrocarbon diluent.

However, if such method is used for the new pretreated catalyst, polymerization occurs in the downstream end of the injection system, which polymerization will eventually clog the system. Because of the very enhanced activity only very little procatalyst needs to be supplied to the continuous polymerization, so the flow rate of the suspension in the procatalyst supply line is so low that at the end of the supply line propene monomer can diffuse from the polymerization reactor into the last section of the injection conduit. It is therefore a second object of this invention to create a new system for injecting these very active pretreated procatalysts into the polymerization reactor.

Accordingly, this invention is concerned with a process for the continuous polymerization of propene in a reactor with a catalyst system comprising:

(a) an active solid catalyst component comprising titanium tetrachloride, magnesium chloride, alkoxy groups and an electron donor,

(b) a compound $AlR_3$ where R represents an alkyl group of from 2 to 8 carbon atoms, and

(c) a selectivity control agent being a Lewis base which forms a complex with component (b), characterized in that, said solid catalyst component (a), prior to employing it in propene polymerization, is contacted at a temperature of from 10 to 55°C with a dialkylaluminium chloride in which the alkyl groups each have from 2 to 8 carbon atoms, for at least 4 min. in the absence of propene and system components (b) and (c) and in the presence of an inert liquid hydrocarbon diluent and in which catalyst component (a) is subsequently introduced into said reactor vessel via a conduit in admixture with a gaseous stream of hydrogen, nitrogen, methane, ethane, propane, isopropane, n-butane and mixtures thereof, at a velocity of at least 3 $m.sec^{-1}$.

The procatalysts which are improved by pretreatment with dialkylaluminium chloride may be produced by methods known per se, e.g. those disclosed in U.S. Patent No. 4,329,253, European Patent Spec. 19,330, British Patent Spec. 1,550,195, 1,554,340, 1,559,194 and 1,603,724. Such procatalysts are prepared by reacting a magnesium alkoxide, suitably magnesium diethoxide, with titanium tetrachloride in the presence of or with subsequent addition of an aromatic ester electron donor, preferably in the presence of and/or with subsequent treatment with a halohydrocarbon liquid such as chlorobenzene or carbon tetrachloride, to produce a composition of combined tetravalent titanium chloride compounds, magnesium chloride and the electron donor, and further treating the resulting solid at an elevated temperature with titanium tetrachloride, optionally in the copresence of benzoyl chloride, in one or more contacts. Preferred procatalysts have the general formula

$$TiMg_xCl_y(OR)_z.aED$$

wherein R is an alkyl group of 2—8 carbon atoms, preferably ethyl; ED is an electron donor, preferably an aromatic ester;

$x=5$—40 and preferably 9—20;

$y=10$—100 and preferably 20—40;

$z=0.01$—1.0 and preferably 0.02—0.2; and

$a=0.5$—10 and preferably 0.6—3.5.

A variety of electron donor compounds, disclosed in the prior art as useful in the preparation of supported coordination procatalysts may be employed as compound ED. Very good procatalysts can be made using ethyl benzoate, ethyl-p-toluate or ethyl-p-ethoxybenzoate. In the pretreatment of a procatalyst in accordance with this invention the use of diethyl aluminium chloride (DEAC) is preferred.

The reaction of dialkylaluminiumchloride with procatalyst is not instantaneous. A minimum of time i.e. 4 min., must be allowed for contact with procatalyst. On the other hand, the contacting should not be prolonged excessively, it was found that at room temperature and in an inert diluent after holding for six days catalyst activity was reduced compared to use of the same procatalyst without pretreatment. This decrease of activity was accompanied by change of colour of the procatalyst from pale brown after 30

minutes contact to very dark brown after 6 days. It appears that this is due to chemical over-reduction of titanium in the procatalyst.

Contact times of about 4 minutes to one hour will generally be useful. Preferred contacting temperatures do not exceed 30°C. It was found that excellent results are obtained by contacting DEAC and procatalyst in an inert diluent liquid, suitably a paraffinic mineral oil, for 5 to 30 minutes at 25°C when a relatively dilute slurry of procatalyst is treated. Increasing the slurry density from 5% to 40% by weight required an increase of minimum of contact time from about 5 minutes to about 10 minutes.

The pretreatment must be conducted in the absence of propene monomer. When combining the procatalyst with DEAC at ambient temperature in propylene the desired improvement of the procatalyst is not obtained.

The amount of DEAC employed is from 5 to 35 moles per atom of titanium in the procatalyst and preferably from about 10 to about 25 moles DEAC/atom Ti. The pretreatment of the procatalyst is conducted in a liquid hydrocarbon diluent which is inert in the polymerization reaction mixture. Saturated hydrocarbon liquids are suitable, e.g., propane, isopentane, n-heptane, paraffinic hydrocarbon in the gasoline or kerosene boiling range, and highly refined mineral oil.

Cocatalysts used as component (b) with the pretreated procatalysts are trialkyl aluminium compounds $AlR'_3$ wherein R' is an alkyl group of 2 to 8 carbon atoms, preferably ethyl. Before addition to the polymerization reactor, they may be complexed with a selectivity control agent. However, this is not necessary and in a preferred way of operating the process of this invention each of pretreated procatalyst, cocatalyst and SCA are introduced into the reactor through separate feed lines thus using three lines in all to supply the total catalyst system.

A variety of electron donor compounds for use as selectivity control agents may be employed as catalyst component (c). Such compounds are well known in the prior art, preferred species are esters of aromatic carboxylic acids, preferred are e.g. ethyl-p-ethoxybenzoate, methyl and ethylbenzoate, methyl-p-methoxybenzoate and methyl- and ethyl-p-toluate.

The polymerization of propene may be carried out in gas phase or in liquid phase, either employing an inert hydrocarbon diluent as the liquid medium carrying the polypropene suspension or employing propene monomer as the liquid medium.

In a continuous reaction system, the reaction zone is maintained at reaction conditions (temperature 50 to 85°C, pressure 100 to 5000 kPa), monomer is continuously charged to the reactor zone, catalyst components are also charged continuously and reaction mixture which contains polymer is withdrawn continuously. The total amount of aluminium alkyl compounds in the polymerization reaction mixture is in the range of from 15 to 130 moles per atom of titanium, the molar ratio of cocatalyst to SCA agent is suitably in the range from 0.5:1 to 10:1.

The second novel aspect of the present invention deals with the method by which the pretreated procatalyst component is injected into the polymerization reactor. This method comprises mixing the pretreated procatalyst with a gaseous stream and injecting the mixture into the reactor vessel at a velocity in excess of 3 $m.sec^{-1}$. This injection velocity is the velocity at which the gas/slurry mixture passes through the injection opening situated at the end of the injection conduit.

The velocity of the gas-slurry mixture is important to ensure steady introduction of catalyst into the reactor and to keep the downstream end of the injection conduit and the injection orifice free of polymer build-up. Preferred ranges for velocity are between 30 and 200 $m.sec^{-1}$.

Hydrogen is the preferred gaseous medium since it is used in the polymerization of propene to control molecular weight. If desired, all of the hydrogen needed for molecular weight control can be added to the reactor as the carrier gas in the procatalyst injection conduit. However, it is preferred to use only part of the hydrogen needed for molecular weight control as gas carrier in the injection conduit and to add the remaining part separately to the polymerization reactor.

The admixing of the carrier gas and the procatalyst slurry in inert liquid hydrocarbon diluent in the injection conduit is conveniently effected when employing a gas injection nozzle which projects a conically divergent stream of gas under a predetermined angle to the inner wall of the conduit. If the velocity of the gas leaving the nozzle is high enough this will cause the streaming film of procatalyst slurry liquid to be transformed in a mist of fine liquid particles, leaving a substantially "dry" inner wall in the downstream section of the injection conduit.

The gas/slurry mixture thus passes from the gas-injection point to the end-opening of the conduit under conditions which are referred to in the art as "mist annular flow", i.e. a gaseous streaming which is surrounded by a spray of liquid particles. This condition is preferred and it is easily achieved when letting the carrier gas pass the gas-injection nozzle at a linear flow-velocity of 30 $m.sec.^{-1}$ or more.

## Claims

1. Process for the continuous polymerization of propene in a reactor with a catalyst system comprising:

(a) an active solid catalyst component comprising titanium tetrachloride, magnesium chloride, alkoxy groups and an electron donor,

(b) a compound $AlR_3$ where R represents an alkyl group of from 2 to 8 carbon atoms, and

(c) a selectivity control agent being a Lewis base which forms a complex with component (b), characterized in that, said solid catalyst component (a), prior to employing it in propene

polymerization, is contacted at a temperature of from 10 to 55°C with a dialkylaluminium chloride in which the alkyl groups each have from 2 to 8 carbon atoms, for at least 4 min. in the absence of propene and system components (b) and (c) and in the presence of an inert liquid hydrocarbon diluent, and in which said catalyst component (a) is subsequently introduced into said reactor vessel via a conduit in admixture with a gaseous stream of hydrogen, nitrogen, methane, ethane, propane, isopropane, n-butane and mixtures thereof, at a velocity of at least 3 $m.sec.^{-1}$.

2. A process according to claim 1, wherein said gaseous stream is hydrogen.

3. A process according to claim 1 or 2 wherein said velocity is between 30 and 200 $m.sec.^{-1}$.

4. A process as claimed in any of claims 1 to 3, in which the dialkyl aluminium chloride is diethylaluminium chloride.

5. A process as claimed in claim 2 wherein hydrogen is added separately to said reactor vessel.

6. A process as claimed in any of claims 1 to 5 wherein the catalyst system components (a), (b), and (c) are each introduced into said reactor vessel via a separate conduit.

**Patentansprüche**

1. Verfahren zur kontinuierlichen Polymerisation von Propen in einem Reaktor mit einem Katalysatorsystem, umfassend:

(a) eine aktive feste Katalysatorkomponente, umfassend Titantetrachlorid, Magnesiumchlorid, Alkoxygruppen und einen Elektronen-Donator,

(b) eine Verbindung $AlR_3$, worin R eine Alkylgruppe mit 2 bis 8 Kohlenstoffatomen darstellt, und

(c) einen Selektivitätsregler, der eine Lewis-Base ist, die mit der Komponente b) einen Komplex ausbildet, dadurch gekennzeichnet, daß die genannte feste Katalysatorkomponente (a) vor ihrer Verwendung in der Propenpolymerisation bei einer Temperatur von 10 bis 55°C mit einem Dialkylaluminiumchlorid, worin die Alkylgruppen jeweils von 2 bis 8 Kohlenstoffatome aufweisen, während wenigstens 4 Minuten in Abwesenheit von Propen und der Systemkomponenten (b) und (c) und in Anwesenheit eines inerten flüssigen Kohlenwasserstoff-Verdünnungsmittels in Berührung gebracht wird und worin diese Katalysatorkomponente (a) anschließend im Gemisch mit einem gasförmigen Strom von Wasserstoff, Stickstoff, Methan, Ethan, Propan, Isopropan, n-Butan und Gemischen hievon bei einer Geschwindigkeit von wenigstens $3 m.sec^{-1}$ über eine Leitung in das Reaktionsgegäß eingeführt wird.

2. Verfahren nach Anspruch 1, worin der Gasstrom Wasserstoff ist.

3. Verfahren nach Anspruch 1 oder 2, worin die Geschwindigkeit zwischen 30 und 200 $m.sec^{-1}$ beträgt.

4. Verfahren nach einem der Ansprüche 1 bis 3, worin das Dialkylaluminiumchlorid Diethylaluminiumchlorid ist.

5. Verfahren nach Anspruch 2, worin Wasserstoff getrennt zu dem Reaktionsgefäß zugesetzt wird.

6. Verfahren nach einem der Ansprüche 1 bis 5, worin die Katalysatorsystemkomponenten (a), (b) und (c) jeweils über eine getrennte Leitung in das Reaktionsgefäß eingeführt werden.

**Revendications**

1. Procédé de polymérisation continue de propylène, dans un réacteur, avec un système catalytique comprenant:

(a) un constituant catalytique solide actif comprenant du tétrachlorure de titane, du chlorure de magnésium, des groupes alcoxy et un donneur d'électrons,

(b) un composé $AlR_3$, dans lequel R représente un groupe alkyle de 2 à 8 atomes de carbone, et

(c) un agent de contrôle de la sélectivité, qui est une base de Lewis formant un complexe avec le constituant (b), caractérisé en ce que ledit constituant catalytique solide (a), avant son emploi dans la polymérisation du propylène, est mis en contact, à une température de 10 à 55°C, avec un chlorure de dialkylaluminium dans lequel les groupes alkyle comportent chacun de 2 à 8 atomes de carbone, pendant au moins 4 minutes, en l'absence de propylène et des constituants (b) et (c) du système et en présence d'un diluant hydrocarboné liquid inerte, et dans lequel ledit constituant catalytique (a) est ensuite introduit dans ledit réacteur, par une conduite, en mélange avec un courant gazeux d'hydrogène, d'azote, de méthane, d'éthane, de propane, d'isopropane, de n'butane, et de leurs mélanges, à une vitesse d'au moins 3 $m.s_{-1}$.

2. Procédé selon la revendication 1, dans lequel ledit courant gazeux est de l'hydrogène.

3. Procédé selon la revendication 1 ou 2, dans lequel ladite vitesse est comprise entre 30 et 200 $m.s^{-1}$.

4. Procédé selon l'une quelconque des revendications 1 à 3, dans lequel le chlorure de dialkylaluminium est du chlorure de diéthylaluminium.

5. Procédé selon la revendication 2, dans lequel on ajoute l'hydrogène séparément dans ledit réacteur.

6. Procédé selon l'une quelconque des revendications 1 à 5, dans lequel les constituants (a), (b) et (c) du système catalytique sont chacun introduits dans ledit réacteur par une conduite séparée.